# EUROPEAN PATENT APPLICATION

(11) **EP 4 576 640 A1**
(43) Date of publication of application: **25.06.2025**
(21) Application number: 22958517.9
(22) Date of filing: 16.09.2022
(51) Int. Cl.: H04L 5/14

(54) **SUB-BAND FULL-DUPLEX COMMUNICATION SYSTEM AND METHOD, AND BASE STATION**

(71) Applicant: Huawei Technologies Co., Ltd., Shenzhen, Guangdong 518129 (CN)
(72) Inventor: CAI, Buxiao, Shenzhen, Guangdong 518129 (CN); ZHU, Erni, Shenzhen, Guangdong 518129 (CN); LV, Jinsong, Shenzhen, Guangdong 518129 (CN); LU, Yuxiao, Shenzhen, Guangdong 518129 (CN); MENG, Lingliang, Shenzhen, Guangdong 518129 (CN); ZHANG, Nan, Shenzhen, Guangdong 518129 (CN); YANG, Jisong, Shenzhen, Guangdong 518129 (CN)
(74) Representative: Thun, Clemens
(86) International application number: PCT/CN2022/119474
(87) International publication number: WO 2024/055327

(57) **Abstract**

Embodiments of this application provide a sub band full duplex communication system and method, and a base station. The sub band full duplex communication system includes a first branch and a second branch. The first branch includes a transmit chain and a reference chain. The transmit chain includes a DPD, a DAC, a frequency mixer, a power amplifier PA, a circulator, a filter, and a first antenna array that are sequentially connected. The second branch includes a receive chain. The receive chain includes a second antenna array, a low noise amplifier, a frequency mixer, and an ADC that are sequentially connected. In an SBFD slot, the transmit chain of the first branch is configured to perform downlink radio frequency transmission on a baseband signal; the receive chain of the second branch is configured to perform uplink radio frequency transmission on a radio signal; and the reference chain collects a radio frequency signal output by the PA, uses the radio frequency signal as a reference signal, and performs, based on the reference signal, linear cancellation processing on a received signal output by the receive chain. Based on a combination of separation of transmit and receive antenna arrays and linear cancellation processing, interference between uplink and downlink signals is reduced.

## Description

### TECHNICAL FIELD

This application relates to the field of communication technologies, and in particular, to a sub band full duplex communication system and method, and a base station.

### BACKGROUND

5G networks have been put into commercial use on a large scale. Large-bandwidth time division duplex TDD is mainly based on spectrums greater than 3 GHz. An existing 5G TDD spectrum based network has a definite shortcoming in uplink coverage. For example, if network establishing coverage requirements are 100 Mbps for a downlink and 5 Mbps for an uplink, a downlink coverage satisfaction rate is greater than 80%, and an uplink coverage satisfaction rate is less than 50%, there is a big problem in uplink coverage.

In a conventional TDD frame structure, time-frequency resources are divided based on a time dimension, where some time resources is used for an uplink, and some time resources is used for a downlink. In an existing network focused on an enhanced mobile broadband (eMBB) application, a typical downlink-to-uplink time allocation ratio is 7:3, 8:2, or the like, and an uplink transmission accounts for a small proportion. To improve the uplink coverage, a sub band full duplex technology is introduced. Compared with the TDD frame structure, a sub band full duplex frame structure may effectively improve the uplink coverage. In the conventional TDD frame structure, both an uplink and a downlink of each slot exclusively occupy entire frequency domain resources. The sub band full duplex technology is implemented by performing sub band-level frequency division multiplexing on a TDD large-bandwidth spectrum and separating configuring uplink and downlink transmission resources at different frequencies of some slots. Because more uplink and downlink slots are configured, an uplink delay and a downlink delay can be reduced. More uplink resources can be flexibly configured, facilitating uplink coverage enhancement and a capacity increase. However, because uplink transmission and downlink transmission are performed in a same slot, there is mutual impact between an uplink and a downlink, particularly impact of the downlink on the uplink. This easily leads to congestion in an uplink receive channel and affects the uplink coverage.

### SUMMARY

In view of the foregoing content, embodiments of the present invention provide a sub band full duplex communication system and method, and a base station, to reduce interference between uplink and downlink signals based on a combination of separation of transmit and receive antenna arrays and linear cancellation processing.

According to a first aspect, an embodiment of this application provides a sub band full duplex communication system, including: a first branch that includes a transmit chain and a reference chain, where the transmit chain includes a digital predistortion DPD, a digital-to-analog converter DAC, a frequency mixer, a power amplifier PA, a circulator, a filter, and a first antenna array that are sequentially connected; and a second branch that includes a receive chain, where the receive chain includes a second antenna array, a filter, a low noise amplifier, a frequency mixer, and an analog-to-digital converter ADC that are sequentially connected. In an SBFD slot, the transmit chain is configured to perform downlink radio frequency transmission on a baseband signal; the receive chain is configured to perform uplink radio frequency transmission on a radio signal; and the reference chain collects an amplified radio frequency signal output by the PA, to obtain a reference signal, and performs, based on the reference signal, linear cancellation processing on a digital received signal output by the receive chain.

According to the foregoing technical solution, in the SBFD slot, the transmit chain is configured to perform downlink radio frequency transmission on the baseband signal; the receive chain is configured to perform uplink radio frequency transmission on the radio signal, and the first antenna array and the second antenna array are disposed separately, to improve isolation between transmit and receive antenna arrays; and the reference chain collects the radio frequency signal output by the PA, uses the radio frequency signal as a reference signal, and performs, based on the reference signal, linear cancellation processing on the digital received signal output by the receive chain, to further reduce impact of a downlink signal on an uplink signal.

In some embodiments, linear cancellation processing may be performed on the digital received signal based on the reference signal in the receive chain of the second branch (before the received signal is sent to a baseband) or in the baseband.

In a possible implementation of the first aspect, the reference chain includes a coupler, a frequency mixer, and an analog-to-digital converter that are sequentially connected, the coupler is configured to collect the radio frequency signal processed by the PA, and the frequency mixer and the analog-to-digital converter sequentially perform down-conversion and sampling to convert the radio frequency signal into a digital signal, use the digital signal as a reference signal, and perform, based on the reference signal, linear cancellation processing on the received signal output by the receive chain.

According to the foregoing technical solution, the coupler collects the radio frequency signal processed by the PA, the frequency mixer and the analog-to-digital converter sequentially perform down-conversion and sampling to convert the radio frequency signal into the digital signal, use the digital signal as a reference signal, and perform, based on the reference signal, linear cancellation processing on the digital received signal output by the ADC of the receive chain.

In a possible implementation of the first aspect, the reference chain further includes a filter, one end of the filter is connected to the coupler, and the other end of the filter is connected to the frequency mixer.

According to the foregoing technical solution, if the filter is a tunable filter, the tunable filter filters the signal collected by the coupler, to reduce energy within a downlink sub band range and avoid a limitation on an ADC dynamic range in the reference chain. In addition, the tunable filter may adjust a passband bandwidth based on an actual requirement, to improve an application scope of the sub band full duplex system. An implementation of the tunable filter is to include a plurality of filters with different bandwidths, and the filters with different bandwidths are selected based on a requirement by switching a switch. Certainly, in another embodiment, the filter may alternatively be a filter with a fixed bandwidth.

In a possible implementation of the first aspect, the reference chain further includes a switch unit and a low noise amplifier, one end of the switch unit is connected to the frequency mixer, and one end of the low noise amplifier is connected to the circulator. When the other end of the switch unit is connected to the filter, the first antenna array is configured to send a downlink signal; or when the other end of the switch unit is connected to the other end of the low noise amplifier, the first antenna array is configured to receive an uplink signal.

In an SBFD slot, the transmit chain of the first branch works, and is configured to convert the signal from the baseband signal to the radio frequency signal. In addition, a switch in the reference chain is switched to be connected to the filter. In this case, the reference chain works in a reference channel mode, and is configured to perform real-time sampling on the transmit radio frequency signal processed by the PA to obtain the reference signal. The receive chain of the second branch works normally, and receives a port radio signal of the second antenna array port to obtain an uplink signal. Because the transmit signal leaks to the receive chain, the received uplink signal includes both a service signal and a transmit self-interference signal. Linear cancellation processing is performed on the received signal based on the reference signal obtained by the reference chain through sampling, to cancel a self-interference component in the uplink signal. Antenna isolation and linear cancellation are combined, so that impact of a downlink on an uplink is cancelled in the two branches.

According to the foregoing technical solution, a function of the first antenna array may be adjusted based on an uplink requirement and a downlink requirement. For example, the first antenna array may be configured to send the downlink signal or receive the uplink signal.

In a possible implementation of the first aspect, the receive chain further includes a filter, one end of the filter is connected to the low noise amplifier, and the other end of the filter is connected to the frequency mixer. In an SBFD slot, a passband bandwidth of the tunable filter matches a UL sub band, to reduce energy of a DL sub band and avoid ADC saturation of the receive chain. In a UL slot, a passband bandwidth of the tunable filter is switched to an entire frequency band, and receiving of a full frequency band uplink signal is not affected. A downlink signal causes strong interference to the uplink receive chain, and the receive chain and the reference chain have high requirements on an ADC dynamic range, causing a great challenge to an engineering implementation. The dynamic range requirements of the receive chain and reference chain are reduced by adding the filter, facilitating the engineering implementation.

When the filters of the receive chain and the reference chain are filters with fixed bandwidths, only a fixed sub band bandwidth configuration can be supported.

When the filters of the receive chain and the reference chain are filters with adjustable bandwidths, a UL sub band bandwidth can be flexibly configured.

In a possible implementation of the first aspect, the first branch includes a plurality of transmit chains and a plurality of reference chains, the second branch includes a plurality of receive chains, the first antenna array, the transmit chain, and the reference chain are in one-to-one correspondence in the first branch, and the second antenna array and the receive chain are in one-to-one correspondence in the second branch.

The plurality of receive radio frequency chains and the plurality of transmit radio frequency chains are in one-to-one correspondence with target antenna arrays, and the target antenna array may be the first antenna array or the second antenna array.

In a possible implementation of the first aspect, the first branch is disposed on a first module, and the first module may be configured to implement a function of the second branch. For example, the first module is configured through software, so that the first module can implement the function of the second branch. In this way, functions of different branches may be implemented by using a same hardware module.

In a possible implementation of the first aspect, the first branch is disposed on a first module, the second branch is disposed on a second module, and the first module and the second module are two modules independent of each other.

According to the foregoing technical solution, the first branch and the second branch are placed in two independent modules, to improve independence of the first branch and the second branch and flexibility of the first branch and the second branch.

In a possible implementation of the first aspect, the second branch further includes an auxiliary transmit chain, structures of the auxiliary transmit chain and the transmit chain are the same, the auxiliary transmit chain reuses the second antenna array and the filter of the receive chain, and the auxiliary transmit chain and the receive chain work alternately; and when the auxiliary transmit chain is in a working state, the second antenna array is configured to send a signal; or when the receive chain is in a working state, the second antenna array is configured to receive a signal.

A second aspect provides a base station, including the sub band full duplex communication system according to any one of the implementations of the first aspect.

In a possible implementation of the second aspect, the base station further includes a baseband processing unit BBU and an active antenna processing unit AAU, the AAU includes the sub band full duplex communication system according to any one of the implementations of the first aspect, and the BBU is configured to perform power reduction scheduling on a downlink resource block near an uplink sub band edge.

A third aspect provides a sub band full duplex communication method, including: in an SBFD slot, performing downlink radio frequency transmission on a baseband signal by sequentially using a digital predistortion DPD, a digital-to-analog converter DAC, a frequency mixer, a power amplifier PA, a circulator, a filter, and a first antenna array of a transmit chain; performing uplink radio frequency transmission on a radio signal by sequentially using a second antenna array, a filter, a low noise amplifier, a frequency mixer, and an analog-to-digital converter ADC of a receive chain; and collecting, by a reference chain, an amplified radio frequency signal output by the PA, to obtain a reference signal, and performing, based on the reference signal, linear cancellation processing on a received signal output by the receive chain.

In a possible implementation of the third aspect, the collecting, by a reference chain, an amplified radio frequency signal output by the PA, to obtain a reference signal, and performing, based on the reference signal, linear cancellation processing on a received signal output by the ADC includes: collecting, by a coupler, the radio frequency signal amplified by the PA; converting, by the frequency mixer and the analog-to-digital converter, the radio frequency signal into a digital signal, using the digital signal as a reference signal, and performing, based on the reference signal, linear cancellation processing on the received signal output by the receive chain.

In a possible implementation of the third aspect, the method further includes: The filter filters the radio frequency signal collected by the coupler, and sends a filtered radio frequency signal to the frequency mixer. The filter is a tunable filter or a filter with a fixed bandwidth.

In a possible implementation of the third aspect, in a downlink slot or an SBFD slot, one end of a switch unit is connected to the frequency mixer, the other end of the switch unit is connected to the filter, and the first antenna array is configured to send a downlink signal; or in an uplink slot, one end of a low noise amplifier is connected to the circulator, one end of a switch unit is connected to the frequency mixer, the other end of the switch unit is connected to the other end of the low noise amplifier, and the first antenna array is configured to receive an uplink signal.

In a possible implementation of the third aspect, the first branch includes a plurality of transmit chains and a plurality of reference chains, the second branch includes a plurality of receive chains, the first antenna array, the transmit chain, and the reference chain are in one-to-one correspondence in the first branch, and the second antenna array and the receive chain are in one-to-one correspondence in the second branch.

In a possible implementation of the third aspect, the first branch is disposed on a first module, the second branch is disposed on a second module, and the first module and the second module are two modules independent of each other.

It should be understood that, for technical effects of any one of the designs of the second aspect and the third aspect, refer to the beneficial effects in the corresponding method provided above. Details are not described herein again.

### BRIEF DESCRIPTION OF DRAWINGS

FIG. 1 is a diagram of a structure of an SBFD slot;
FIG. 2 is a diagram of a structure of an SBFD slot according to an embodiment of this application;
FIG. 3 is a diagram of a structure of a sub band full duplex communication system according to an embodiment of this application;
FIG. 4 is a diagram of a structure of another sub band full duplex communication system according to an embodiment of this application;
FIG. 5 is a diagram of a structure of still another sub band full duplex communication system according to an embodiment of this application;
FIG. 6 is a diagram of a signal change according to an embodiment of this application;
FIG. 7 is a diagram of another structure of an SBFD slot according to an embodiment of this application;
FIG. 8 is a diagram of a structure of yet another sub band full duplex communication system according to an embodiment of this application;
FIG. 9 is a diagram of module composition of a sub band full duplex communication system according to an embodiment of this application;
FIG. 10 is a diagram of a module of a base station according to an embodiment of this application; and
FIG. 11 is a diagram of power reduction scheduling according to an embodiment of this application.

### Descriptions of reference numerals of main components

| | |
|---|---|
| Sub band full duplex communication system | 100 |
| First branch | 10 |
| Transmit chain | 11 |
| First antenna array | 111 |
| Baseband modem | 112 |
| DPD | 113 |
| DAC | 114 |
| Frequency mixer | 115 |
| PA | 116 |
| Circulator | 117 |
| Filters | 118 and 212 |
| Reference chain | 12 |
| Coupler | 121 |
| Frequency mixer | 122 |
| ADCs | 123 and 215 |
| LIC | 124 |
| Filters | 125 and 219 |
| Switch unit | 126 |
| Second branch | 20 |
| Receive chain | 21 |
| Second antenna array | 211 |
| Low noise amplifiers | 213 and 127 |
| Frequency mixer | 214 |
| Auxiliary transmit chain | 22 |

In the following specific implementations, this application is further described with reference to the accompanying drawings.

### DESCRIPTION OF EMBODIMENTS

The terms "first" and "second" mentioned below are used merely for the purpose of description, and shall not be construed as indicating or implying relative importance or implying a quantity of indicated technical features. Therefore, a feature limited by "first" or "second" may explicitly or implicitly include one or more of the features. In the descriptions of embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, the terms such as "example" and "for example" used herein are intended to present the related concept in a specific manner.

Unless otherwise defined, all technical and scientific terms used in this specification have same meanings as those usually understood by a person skilled in the art of this application. Terms used in the specification of this application are merely for the purpose of describing specific embodiments, but are not intended to limit this application. It should be understood that, in this application, unless otherwise specified, "a plurality of" means two or more, and "and/or" includes any or all combinations of one or more of associated listed items.

First, the technical terms in embodiments of this application are described.

### 1. Sub band full duplex (Sub band full duplex, SBFD)

The sub band full duplex is implemented by separately configuring uplink and downlink transmission resources at different frequencies of some slots. Because more uplink and downlink slots are configured, an uplink delay and a downlink delay can be reduced. More uplink resources can be flexibly configured, facilitating uplink coverage enhancement and a capacity increase.

To enhance uplink coverage and increase an uplink capacity, a sub band full duplex technology is promoted in an existing communication system. In this application, an example in which the sub band full duplex technology is applied to a base station is used for description.

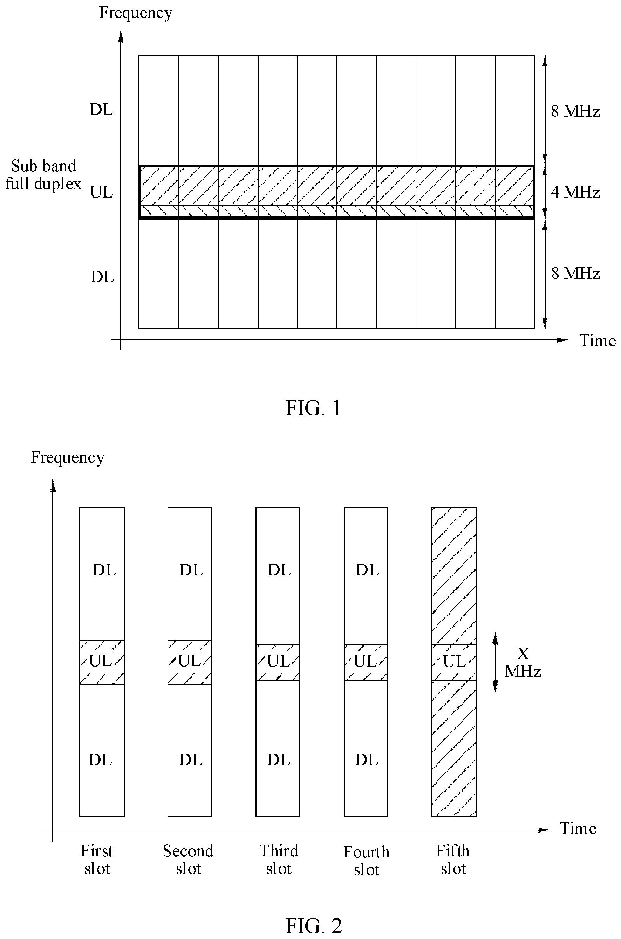

FIG. 1 is a diagram of a sub band full duplex frame structure. In 10 slots in FIG. 1, each slot is a frequency-duplex SBFD slot that can simultaneously perform uplink UL (namely, receive chain) transmission and downlink DL (namely, transmit chain) transmission. As shown in FIG. 1, a UL sub band occupies 4 MHz, and two DL sub bands each occupy 8 MHz. Because uplink transmission and downlink transmission are simultaneously performed in a same slot, there is mutual impact between an uplink and a downlink, particularly impact of the downlink on the uplink. This easily leads to congestion in an uplink receive channel and affects the uplink coverage and sensitivity.

Based on the foregoing problem, an embodiment of this application provides a sub band full duplex communication system. Transmit and receive antennas are separated to reduce mutual impact between an uplink and a downlink, and linear cancellation is performed on an uplink received signal by using a linear cancellation technology, to cancel a self-interference component in the received signal, and reduce impact of the downlink on the uplink.

FIG. 2 is a diagram of a structure of an SBFD slot according to an example of this application. FIG. 2 includes five slots. In a first slot to a fourth slot, an entire frequency band is divided into an UL sub band and DL sub bands, the UL sub band may be used for uplink transmission (for example, X MHz in FIG. 2 is used for uplink transmission), and the DL sub bands may be used for downlink transmission. In a fifth slot, an entire frequency band is used for uplink transmission.

It may be understood that, in another embodiment, a quantity of SBFD slots may be greater than or less than 5. In this embodiment of this application, only five slots are used as an example for description.

In the SBFD slot in FIG. 2, neither an uplink UL nor a downlink DL can occupy an entire frequency resource range. The UL sub band occupies a center part of the frequency band, and the DL sub bands are located on two sides of the frequency band.

In an embodiment, the UL sub band may be symmetric about the frequency band center. In this way, a bandwidth of a lower DL sub band is equal to a bandwidth of an upper DL sub band. However, in another embodiment, the UL sub band may be configured at any location of the frequency band, and in this case, a bandwidth of a lower DL sub band is different from a bandwidth of an upper DL sub band.

It may be understood that, in another embodiment, the SBFD slot may be located in any one of the five slots, that is, any one of the five slots may be used.

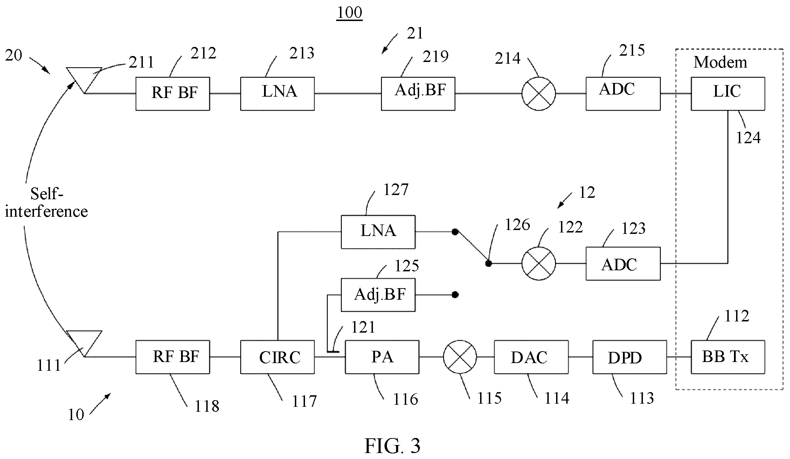

FIG. 3 is a diagram of a sub band full duplex communication system according to an embodiment of this application. In FIG. 3, a sub band full duplex communication system 100 includes a first branch 10 and a second branch 20, the first branch 10 includes a transmit chain 11 and a reference chain 12, and the second branch 20 includes a receive chain 21. The SBFD slot shown in FIG. 2 may be applied to the sub band full duplex communication system shown in FIG. 3. In this case, the transmit chain 11 is configured to send a downlink signal in the first slot to the fourth slot, the receive chain 21 is configured to receive an uplink signal in the first slot to the fourth slot, and both the first branch 10 and the second branch 20 are configured to receive uplink signals in the fifth slot. A quantity and diameters of equivalent array antennas are increased, to enhance uplink coverage.

In FIG. 3, the transmit chain 11 includes a first antenna array 111, the receive chain 21 includes a second antenna array 211, and there is a spacing, which is, for example, 50 cm, between the first antenna array 111 and the second antenna array 211. In an SBFD slot, when the first antenna array 111 is configured to send a signal, the second antenna array 211 is configured to receive a signal. Based on the physical spacing between the first antenna array 111 and the second antenna array 211, interference caused by a downlink transmit signal to an uplink in the same SBFD slot is reduced.

In another embodiment, an isolation member (not shown in the figure) is disposed between the first antenna array 111 and the second antenna array 211. Isolation between the first antenna array 111 and the second antenna array 211 is improved by using the isolation member, thereby reducing interference between the first antenna array 111 and the second antenna array 211.

The reference chain is configured to collect a radio frequency signal output by a power amplifier PA 116 of the transmit chain 11, use the radio frequency signal as a reference signal, and cancel a self-interference component in the uplink received signal based on the reference signal by using a linear cancellation technology, to further reduce interference between the downlink transmit signal and the uplink received signal.

Refer to FIG. 3 again. The transmit chain 11 further includes: a baseband modem BB Tx 112, a digital predistortion module DPD 113, a digital-to-analog converter DAC 114, a frequency mixer 115, a power amplifier PA 116, a circulator CIRC 117, and a filter RF BF 118.

For ease of description and clarity, FIG. 3 shows only a single transmit radio frequency RF chain, a plurality of transmit radio frequency chains may be integrated into the first branch 10, and each transmit radio frequency chain is configured to convert a baseband signal into a radio frequency transmit signal. It may be understood that, in another embodiment, in the sub band full duplex communication system, a quantity of RF chains may be set based on a requirement. In addition, a quantity of reference chains is the same as a quantity of transmit chains, and the reference chains and the transmit chains are in one-to-one correspondence.

When the sub band full duplex communication system 100 sends a signal, the baseband modem 112 includes a baseband transmitter 1121 (BB Tx) configured to generate a baseband signal for each transmit RF chain. The baseband transmitter 1121 generates the baseband signal for each transmit RF chain, and then sends the baseband signal to the DPD 113. The DPD 113 performs predistortion processing, and the digital-to-analog converter DAC 114 performs conversion processing to obtain an analog signal.

Then, after the analog signal is amplified by the power amplifier PA 116, an amplified analog signal sequentially passes through the circulator 117 and the filter 118 to filter out out-band spurious emission. Finally, the first antenna array 111 radiates energy to free space.

The reference chain 12 includes a coupler 121, a frequency mixer 122, and an analog-to-digital converter ADC 123. The coupler 121 collects the radio frequency signal amplified by the power amplifier PA 116 in the transmit chain, and sends the radio frequency signal to the frequency mixer 122 and the analog-to-digital converter ADC 123. After the frequency mixer 122 and the analog-to-digital converter ADC 123 process the radio frequency signal, a digital reference signal is obtained. Then, an LIC 124 of a baseband processing unit performs cancellation processing on the received signal based on the digital reference signal, in other words, a self-interference component in the uplink received signal is canceled by using a linear interference cancellation technology.

It may be understood that, in another embodiment, the LIC 124 may be disposed in the second branch 20. For example, the LIC 124 may be used as a part of the receive chain 21. In this way, before the received signal is transmitted to the BBU, the LIC 124 of the receive chain 21 has performed cancellation processing on the received signal.

The receive chain 21 further includes a filter RF BF 212, a low noise amplifier LNA 213, a frequency mixer 214, and an analog-to-digital converter ADC 215.

For clarity of description, FIG. 3 shows only a single receive radio frequency chain, and each receive radio frequency chain is configured to convert a received radio frequency signal into a baseband signal. In FIG. 3, a plurality of receive radio frequency chains are integrated into the second branch 20. The sub band full duplex communication system may include a plurality of receive radio frequency chains. Each receive radio frequency chain is configured to perform down-conversion, from an RF to a baseband, on an RF signal received by the receive radio frequency chain from the second antenna array.

When the sub band full duplex communication system 100 receives a signal, the second antenna array 211 receives an uplink radio frequency signal. The low noise amplifier 213 performs low noise amplification on a filtered signal for uplink transmission, and then sends an amplified signal to the frequency mixer 214 and the ADC 215. The ADC 215 processes the signal from the low noise amplifier 213 to obtain a digital received signal.

Then, the LIC 124 performs linear cancellation on the received signal and the reference signal by using the linear interference cancellation technology, to cancel a self-interference part in the signal. The reference signal includes the transmitted baseband signal, a nonlinear component of the reference signal, and noise. The received signal includes a self-interference signal and a useful signal.

The sub band full duplex communication system 100 collects, by using the reference chain 12, the signal amplified by the PA 116 of the transmit chain 11, and uses the signal as a reference signal. The reference signal includes a non-linear component and noise generated based on the downlink transmit signal. Compared with a solution of separately collecting a signal processed by the filter 118 of the transmit chain 11 for analog linear cancellation and collecting a baseband signal for digital linear/nonlinear cancellation, in this application, nonlinear modeling does not need to be performed, a cancellation cost is reduced. In addition, the reference chain 12 implements switching between two working modes of a reference channel and a receive channel by using a switch, to reduce a hardware implementation cost.

In some embodiments, the receive chain 21 further includes a filter 219. One end of the filter 219 is connected to the low noise amplifier LNA 213, and the other end is connected to the frequency mixer 214. In an SBFD slot, a passband bandwidth of the tunable filter matches a UL sub band, to reduce energy of a DL sub band and avoid ADC saturation of the receive chain. In a UL slot, a passband bandwidth of the tunable filter is switched to an entire frequency band, and receiving of a full frequency band uplink signal is not affected. A downlink signal causes strong interference to the uplink receive chain, and the receive chain and the reference chain have high requirements on an ADC dynamic range, causing a great challenge to an engineering implementation. The dynamic range requirements of the receive chain and reference chain are reduced by adding the filter, facilitating the engineering implementation. When the filters of the receive chain and the reference chain are filters with fixed bandwidths, only a fixed sub band bandwidth configuration can be supported. When the filters of the receive chain and the reference chain are filters with adjustable bandwidths, a UL sub band bandwidth can be flexibly configured.

In some embodiments, the reference chain 12 further includes a filter 125, which receives an analog signal collected by the coupler 121. After filtering the analog signal, the filter 125 sends a filtered signal to the frequency mixer 122 and the ADC 123. The filter 125 may be a tunable filter. The tunable filter is added, so that an application scope of the analog-to-digital converter ADC is improved, to avoid a limitation on an analog-to-digital converter ADC dynamic range. Certainly, in another embodiment, the filter 125 may alternatively be a filter with a fixed bandwidth.

Refer to FIG. 3. The reference chain 12 further includes a switch unit 126 and a low noise amplifier 127. In the first slot to the fourth slot, the filter 125 is connected to the frequency mixer 122 via the switch unit 126, to be specific, one end of the switch unit 126 is connected to the filter 125, and the other end is connected to the frequency mixer 122. In the fifth slot, the low noise amplifier 127 is connected to the frequency mixer 122 via a switch unit 126, to be specific, one end of the switch unit 126 is connected to the low noise amplifier 127, and the other end is connected to the frequency mixer 122. The low noise amplifier 127 is connected to the circulator 117, and reuses the first antenna array 111, the filter 118, and the circulator 117 of the transmit chain 11. In this case, the first antenna array 111 is configured to receive an uplink signal. Then, the filter 118 filters the received uplink signal, and the low noise amplifier 213 amplifies a filtered uplink signal to perform uplink transmission. Then, the switch unit sends an amplified signal to the frequency mixer 122 and the ADC 123. The ADC 123 processes the uplink signal from the low noise amplifier 213 to obtain a digital received signal. In this way, two ends of the switch unit are connected to different component units, and the first antenna array performs different functions. In this embodiment of this application, when the switch unit is connected to the low noise amplifier and the frequency mixer, the first antenna array is configured to receive the uplink signal. In this case, both the first antenna array and the second antenna array are configured to receive uplink signals, thereby improving uplink coverage.

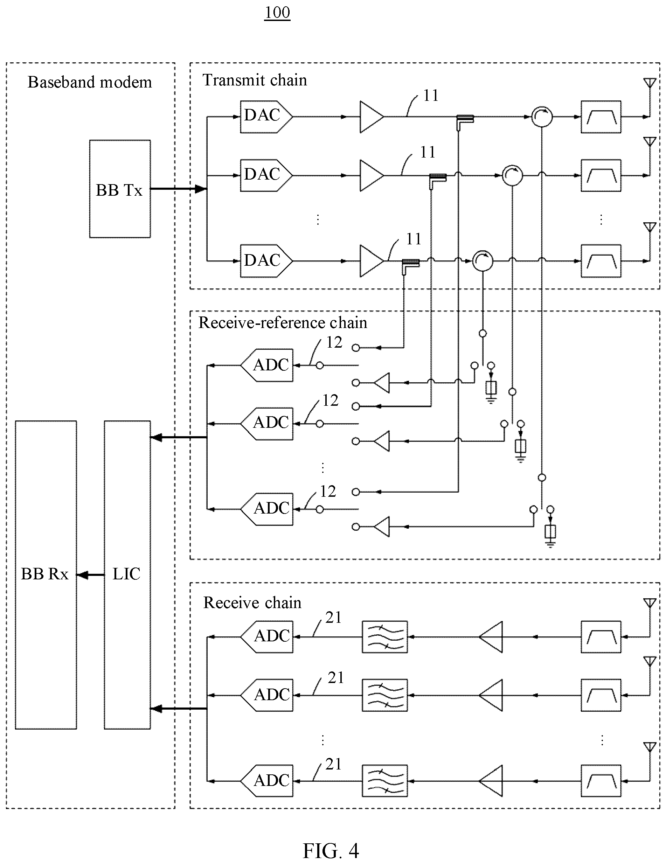

FIG. 4 is a diagram of a sub band full duplex communication system according to an embodiment of this application. The sub band full duplex communication system in FIG. 4 is similar to the sub band full duplex communication system 100 in FIG. 3. A difference lies in the following:
In the sub band full duplex communication system 100 in FIG. 4, a first branch 10 includes a plurality of transmit chains 11 and a plurality of reference chains 12, and each transmit chain 11 and each reference chain 12 are in one-to-one correspondence. A second branch 20 includes a plurality of receive chains 21. Each receive chain 21 may be configured as a receive RF chain, and each transmit chain 11 may be configured as a transmit RF chain. Therefore, the receive RF chain or the transmit RF chain and a target antenna array are in one-to-one correspondence, and the target antenna array is a first antenna array or a second antenna array. The first branch 10 in FIG. 4 includes the plurality of transmit chains 11 and the plurality of reference chains 12. Therefore, a baseband transmitter 1121 of a baseband modem 112 generates a baseband signal for each transmit RF chain.

In a first slot to a fourth slot, that is, SBFD slots, the plurality of transmit RF chains in the first branch are configured to send downlink signals, and the plurality of receive RF chains in the second branch are configured to receive uplink signals. In a fifth slot, the reference chain of the first branch is configured to be in a receive mode, and both the receive RF chain of the second branch and the reference chain of the first branch are configured to receive uplink signals. Therefore, in the SBFD slot, the first antenna array of the transmit RF chain is configured to send a signal, and the second antenna array of the receive RF chain is configured to receive a signal. In the fifth slot, both the first antenna array and the second antenna array are configured to receive signals.

Further, in this embodiment of this application, each antenna corresponds to one RF chain, and all RF chains are highly independent of each other, so that a quantity of antenna arrays and a quantity of RF chains can be adjusted based on a requirement.

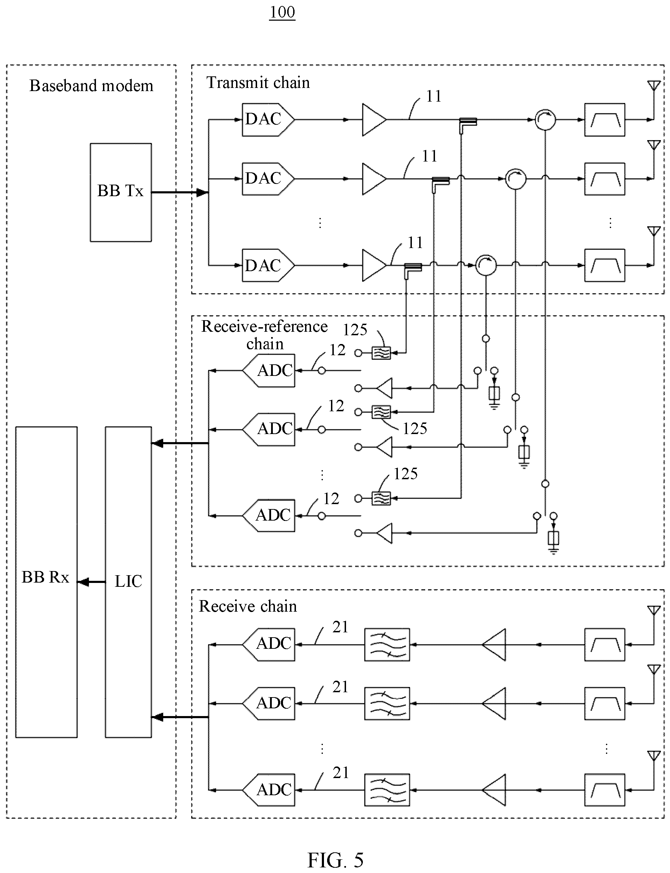

FIG. 5 is a diagram of a sub band full duplex communication system according to an embodiment of this application. The sub band full duplex communication system in FIG. 5 is similar to the sub band full duplex communication system in FIG. 4. A difference lies in the following:
A reference chain in FIG. 5 further includes a filter. In an SBFD slot, UL sub bands of different operators occupy different bandwidths and locations. The filter is a tunable filter, and a filtering range of the tunable filter may be adjusted based on a bandwidth and a location occupied by a UL sub band. The tunable filter is added to the reference chain, to improve an application scope of the sub band full duplex communication system. Certainly, in another embodiment, the filter may alternatively be a filter with a fixed bandwidth.

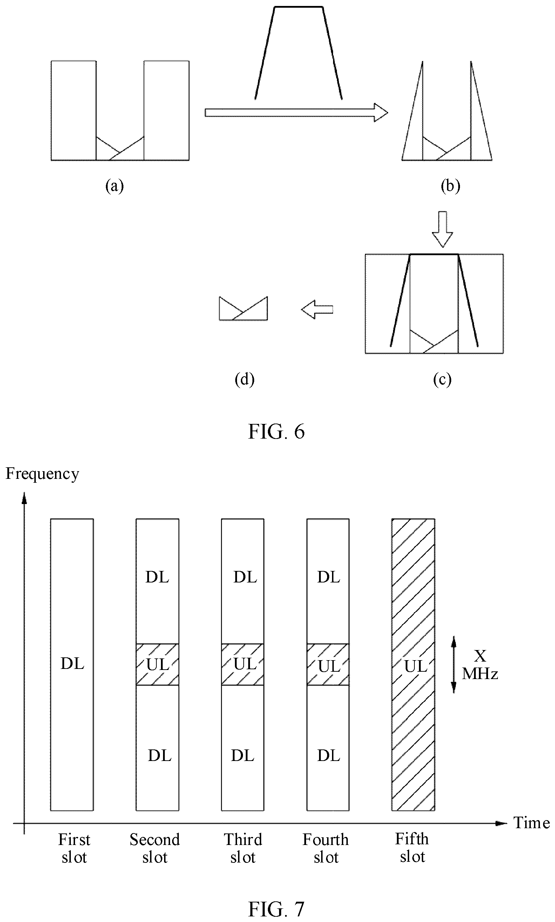

FIG. 6 is a diagram of a signal change according to an embodiment of this application. (a) in FIG. 6 shows a spectrum of a signal that is amplified by a PA of a first branch and that is collected by a reference chain. (b) in FIG. 6 shows a spectrum of a signal processed by a tunable filter. Then, after being converted by an ADC, the signal in FIG. (b) is converted into a digital signal, and then after being filtered by a digital filter, the digital signal becomes a reference signal shown in (c) in FIG. 6. Then, the reference signal and a received signal of a second branch are canceled in a BBU or a receive chain. In this way, the tunable filter is added to the reference chain, so that a filtering range of the filter can be adjusted based on different requirements.

FIG. 7 is a diagram of another structure of an SBFD slot format according to an embodiment of this application. FIG. 7 includes five slots. A first slot is a downlink-only slot, and all frequency resources in the first slot are used for downlink transmission. A second slot to a fourth slot are SBFD slots, some frequencies are used for uplink transmission, and other frequencies are used for downlink transmission. A fifth slot is an uplink-only slot, and all frequencies are used for uplink transmission of a base station. It may be understood that, in another embodiment, a quantity of SBFD slots may be greater than or less than 5. In this embodiment of this application, only five slots are used as an example for description.

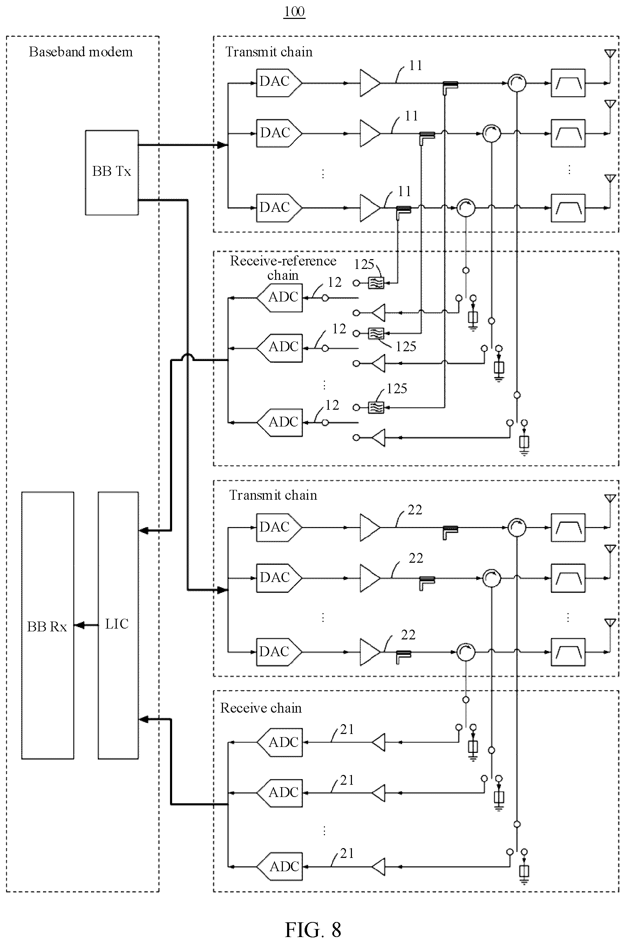

FIG. 8 is a diagram of a sub band full duplex communication system according to an embodiment of this application. The sub band full duplex communication system in FIG. 8 is similar to the sub band full duplex communication system in FIG. 5. The sub band full duplex communication system 100 includes a first branch 10 and a second branch 20. The first branch 10 includes a plurality of transmit chains 11 and a plurality of reference chains 12, and the second branch 20 includes a plurality of receive chains 21. A difference lies in the following: The second branch 20 further includes a plurality of auxiliary transmit chains 22. In this way, in the first slot in FIG. 7, both the first branch 10 and the second branch 20 are configured to send downlink signals. In the second slot to the fourth slot, the transmit chain 11 of the first branch 10 is configured to send a downlink signal, the reference chain 12 collects a transmit signal, and uses the transmit signal as a reference signal, the second branch 20 is configured to receive an uplink signal. In the fifth slot, both the first branch 10 and the second branch 20 are configured to receive uplink signals.

Further, structures of the auxiliary transmit chain 22 and the transmit chain 11 are the same. The auxiliary transmit chain 22 includes a digital-to-analog converter DAC, a frequency mixer, a power amplifier PA, a circulator, a filter, and an antenna array. The receive chain 21 and the auxiliary transmit chain 22 reuse the circulator, the filter, and the antenna array.

Based on a base station slot configuration, the receive chain 21 and the auxiliary transmit chain 22 are controlled to work alternately. For example, in the first slot, the auxiliary transmit chain 22 works, and a second antenna array 211 is configured to send a downlink signal. In the second slot to the fourth slot, the receive chain 21 works, and the receive chain 21 is configured to receive an uplink signal. In the fifth slot, the receive chain 21 works, and the receive chain 21 is configured to receive an uplink signal.

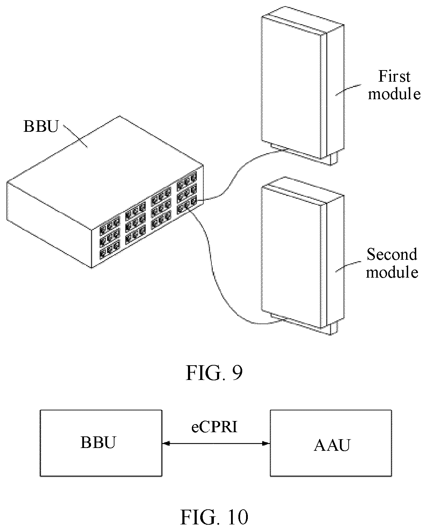

FIG. 9 is a diagram of a sub band full duplex communication system according to an embodiment of this application. The sub band full duplex communication system in FIG. 9 is similar to the sub band full duplex communication system in FIG. 5. A difference lies in the following: The embodiment in FIG. 5 is implemented inside one base station module. In FIG. 9, first branches shown in FIG. 5 are integrated into one module, and then another module that has same hardware as the module may be configured through software to implement a function of a second branch. Then, the two independent modules that have the same hardware are spliced, to implement separation of transmit and receive antennas. The two modules are controlled through software to support a sub band full duplex mode. In this way, a single module may work in a TDD mode, and two modules may work in a sub band full duplex mode through splicing.

In another embodiment, the sub band full duplex communication system includes a first branch and a second branch. The first branch is located on a first module, the second branch is located on a second module, and the first module and the second module are two modules independent of each other. In this way, the first branch and the second branch are placed in different modules, to implement separation of receiving and sending.

Refer to FIG. 9. A first module and a second module in FIG. 9 are separately connected to a baseband processing unit BBU.

FIG. 10 is a diagram of a module of a base station according to an embodiment of this application. The base station includes a baseband processing unit BBU and an active antenna processing unit AAU, and the AAU includes the sub band full duplex communication system according to the foregoing embodiment. The BBU and AAU transmit data and communicate with each other through an enhanced common public radio interface eCPRI.

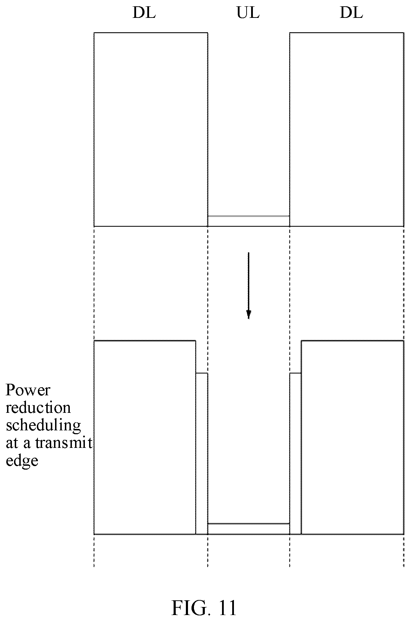

In the foregoing embodiment, as shown in FIG. 11, a sub band full duplex communication system uses a sub band full duplex technology. In an SBFD slot, a downlink transmit signal affects an uplink received signal, causing strong blocking on the received signal. The strong blocking is affected by phase noise of a receive chain, and a noise floor of a resource block that is connected to a DL sub band and that is in a UL sub band increases. The BBU adaptively adjusts transmit power based on an actual transmission status of each channel or signal and UE feedback information. In this way, a DL resource block RB near a UL sub band edge is transmitted by reducing power, and impact on a downlink service is minimized as much as possible.

Specifically, the BBU is configured to perform power reduction scheduling on the downlink RB near the uplink sub band edge, to reduce the impact of the phase noise on the increase of the noise floor at the UL sub band edge.

In some embodiments, the base station may be a base station that supports massive MIMO.

An embodiment of this application further provides a sub band full duplex communication method. The sub band full duplex communication method may be applied to the sub band full duplex communication system described in any one of the foregoing embodiments.

The sub band full duplex communication method includes: in an SBFD slot, performing downlink radio frequency transmission on a baseband signal by sequentially using a digital predistortion DPD, a digital-to-analog converter DAC, a frequency mixer, a power amplifier PA, a circulator, a filter, and a first antenna array of a transmit chain; performing uplink radio frequency transmission on a radio frequency signal by using a second antenna array, a filter, a low noise amplifier, a frequency mixer, and an analog-to-digital converter ADC of a receive chain; and collecting, by a reference chain, a radio frequency signal output by the PA, using the radio frequency signal as a reference signal, and performing, based on the reference signal, linear cancellation processing on a received signal output by the ADC of the receive chain.

In some embodiments, the collecting, by a reference chain, a radio frequency signal output by the PA, using the radio frequency signal as a reference signal, and performing, based on the reference signal, linear cancellation processing on a received signal output by the ADC of the receive chain includes:
collecting, by a coupler, the radio frequency signal amplified by the PA;
converting, by the frequency mixer and the analog-to-digital converter, the radio frequency signal into a digital signal; and
using, by an LIC, the digital signal as a reference signal, and performing, based on the reference signal, linear cancellation processing on the received signal output by the receive chain.

The LIC may be disposed in a BBU or disposed in the receive chain.

In some embodiments, the method further includes:
The filter filters the radio frequency signal collected by the coupler, to reduce energy of a DL sub band signal, and avoid a limitation on an ADC dynamic range.

In some embodiments, the method further includes:
In a downlink slot or an SBFD slot, one end of a switch unit is connected to the frequency mixer, the other end of the switch unit is connected to the filter, and the first antenna array is configured to send a downlink signal; or
in an uplink slot, one end of the low noise amplifier is connected to the circulator, one end of a switch unit is connected to the frequency mixer, the other end of the switch unit is connected to the other end of the low noise amplifier, and the first antenna array is configured to receive an uplink signal.

In some embodiments, there are a plurality of transmit chains and a plurality of receive chains, the plurality of transmit chains and the plurality of receive chains are configured as a plurality of transmit radio frequency chains and a plurality of receive radio frequency chains, each receive radio frequency chain is configured to convert a received radio frequency signal into a baseband signal, and each transmit radio frequency chain is configured to convert a baseband signal into a radio frequency transmit signal.

The plurality of receive radio frequency chains and the plurality of transmit radio frequency chains are in one-to-one correspondence with target antenna arrays, and the target antenna array may be the first antenna array or the second antenna array.

In some embodiments, the first branch is disposed on a first module, and the first module may be configured to implement a function of the second branch. For example, the first module is configured through software, so that the first module can implement the function of the second branch. In this way, functions of different branches may be implemented by using a same hardware module.

In some embodiments, the first branch is disposed on a first module, the second branch is disposed on a second module, and the first module and the second module are two modules independent of each other.

A person skilled in the art should understand that embodiments of this application may be provided as a method, a system, or a computer program product. Therefore, this application may use a form of hardware embodiments, software embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code. The computer program code may be stored in a computer-readable memory that can guide a computer or another programmable data processing device to operate in a particular manner.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the network congestion control method in the foregoing method embodiments.

The foregoing descriptions about implementations allow a person skilled in the art to clearly understand that, for the purpose of convenient and brief description, division of the foregoing functional modules is merely used as an example for illustration. During actual application, the foregoing functions can be allocated to different modules for implementation based on a requirement, that is, an inner structure of the apparatus is divided into different functional modules to implement all or some of the functions described above.

In several embodiments provided in this application, it should be understood that the disclosed apparatus and method may be implemented in other manners. For example, the described apparatus embodiment is merely an example. For example, division of the modules or modules is merely logical function division and may be other division during actual implementation. For example, a plurality of modules or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate components may be or may not be physically separated. Components displayed as modules may be one physical module or a plurality of physical modules, that is, may be located at one location or may be distributed at a plurality of different locations. Some or all the modules may be selected based on an actual requirement to achieve the objectives of the solutions of embodiments.

In addition, functional modules in embodiments of this application may be integrated in one processing module, or each of the modules may exist alone physically, or two or more modules may be integrated in one module. The integrated module may be implemented in a form of hardware, or may be implemented in a form of a software functional module.

If the integrated module is implemented in the form of a software functional module and sold or used as an independent product, the module may be stored in a readable storage medium. Based on such an understanding, the technical solutions in embodiments of this application essentially, or the part contributing to a conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A sub band full duplex communication system, comprising: a first branch that comprises a transmit chain and a reference chain, wherein the transmit chain comprises a digital predistortion DPD, a digital-to-analog converter DAC, a frequency mixer, a power amplifier PA, a circulator, a filter, and a first antenna array that are sequentially connected; and
a second branch that comprises a receive chain, wherein the receive chain comprises a second antenna array, a filter, a low noise amplifier, a frequency mixer, and an analog-to-digital converter ADC that are sequentially connected, and the receive chain is configured to perform down-conversion on an antenna port radio signal of the second antenna array and perform sampling to obtain a digital received signal, wherein
the reference chain is configured to collect a radio frequency signal output by the PA of the transmit chain, use the radio frequency signal as a reference signal, and perform, based on the reference signal, linear cancellation processing on the digital received signal output by the receive chain.

2. The sub band full duplex communication system according to claim 1, wherein the reference chain comprises a coupler, a frequency mixer, and an analog-to-digital converter that are sequentially connected, the coupler is configured to collect the radio frequency signal processed by the PA, and the frequency mixer and the analog-to-digital converter perform down-conversion on the radio frequency signal and convert the radio frequency signal into a digital signal, use the digital signal as a reference signal, and perform, based on the reference signal, linear cancellation processing on the digital received signal output by the ADC of the receive chain.

3. The sub band full duplex communication system according to claim 2, wherein the reference chain further comprises a filter, one end of the filter is connected to the coupler, and the other end of the filter is connected to the frequency mixer.

4. The sub band full duplex communication system according to claim 3, wherein the reference chain further comprises a switch unit and a low noise amplifier, one end of the switch unit is connected to the frequency mixer, and one end of the low noise amplifier is connected to the circulator; and
in a downlink slot or an SBFD slot, the other end of the switch unit is connected to the filter, and the first antenna array is configured to send a downlink signal; or
in an uplink slot, the other end of the switch unit is connected to the low noise amplifier, and the first antenna array is configured to receive an uplink signal.

5. The sub band full duplex communication system according to any one of claims 1 to 4, wherein the first branch comprises a plurality of transmit chains and a plurality of reference chains, the second branch comprises a plurality of receive chains, the first antenna array, the transmit chain, and the reference chain are in one-to-one correspondence in the first branch, and the second antenna array and the receive chain are in one-to-one correspondence in the second branch.

6. The sub band full duplex communication system according to claim 1, wherein the receive chain further comprises a filter, one end of the filter is connected to the low noise amplifier, and the other end of the filter is connected to the frequency mixer.

7. The sub band full duplex communication system according to claim 5, wherein the first branch is disposed on a first module, and the first module may be configured to implement a function of the second branch.

8. The sub band full duplex communication system according to claim 1, wherein the first branch is disposed on a first module, the second branch is disposed on a second module, and the first module and the second module are two modules independent of each other.

9. The sub band full duplex communication system according to claim 5, wherein the second branch further comprises an auxiliary transmit chain, structures of the auxiliary transmit chain and the transmit chain are the same, the auxiliary transmit chain reuses the second antenna array and the filter of the receive chain, and the auxiliary transmit chain and the receive chain work alternately; and when the auxiliary transmit chain is in a working state, the second antenna array is configured to send a signal; or when the receive chain is in a working state, the second antenna array is configured to receive a signal.

10. A base station, comprising the sub band full duplex communication system according to any one of claims 1 to 9.

11. The base station according to claim 10, wherein the base station further comprises a baseband processing unit BBU and an active antenna processing unit AAU, the AAU comprises the sub band full duplex communication system according to any one of claims 1 to 7, and the BBU is configured to perform power reduction scheduling on a downlink resource block near an uplink sub band edge.

12. A sub band full duplex communication method, comprising:
in an SBFD slot, performing downlink transmission on a baseband signal by sequentially using a digital predistortion DPD, digital-to-analog converter DAC, a frequency mixer, a power amplifier PA, a circulator, a filter, and a first antenna array of a transmit chain;
performing uplink radio frequency transmission on a radio signal by sequentially using a second antenna array, a filter, a low noise amplifier, a frequency mixer, and an analog-to-digital converter ADC of a receive chain; and
collecting, by a reference chain, a radio frequency signal output by the PA, using the radio frequency signal as a reference signal, and performing, based on the reference signal, linear cancellation processing on a received signal output by the receive chain.

13. The sub band full duplex communication method according to claim 12, wherein collecting, by the reference chain, the radio frequency signal output by the PA, to obtain the reference signal, and performing, based on the reference signal, linear cancellation processing on the received signal output by the ADC of the receive chain comprises:
collecting, by a coupler, the radio frequency signal amplified by the PA;
converting, by the frequency mixer and the analog-to-digital converter, the radio frequency signal into a digital signal; and
using, by an LIC, the digital signal as a reference signal, and performing, based on the reference signal, linear cancellation processing on the received signal output by the receive chain.

14. The sub band full duplex communication method according to claim 13, wherein the method further comprises:
filtering, by the filter, the radio frequency signal collected by the coupler, and transmitting a filtered radio frequency signal to the frequency mixer.

15. The sub band full duplex communication method according to claim 14, wherein the method further comprises:
in an SBFD slot, one end of a switch unit is connected to the frequency mixer, the other end of the switch unit is connected to the filter, and the first antenna array is configured to send a downlink signal; or
in an uplink slot, one end of the low noise amplifier is connected to the circulator, one end of a switch unit is connected to the frequency mixer, the other end of the switch unit is connected to the other end of the low noise amplifier, and the first antenna array is configured to receive an uplink signal.

16. The sub band full duplex communication method to any one of claims 12 to 15, wherein a first branch comprises a plurality of transmit chains and a plurality of reference chains, a second branch comprises a plurality of receive chains, the first antenna array, the transmit chain, and the reference chain are in one-to-one correspondence in the first branch, and the second antenna array and the receive chain are in one-to-one correspondence in the second branch.

17. The sub band full duplex communication method according to claim 16, wherein the first branch is disposed on a first module, and the first module may be configured to implement a function of the second branch.

18. The sub band full duplex communication method according to claim 16, wherein the first branch is disposed on a first module, the second branch is disposed on a second module, and the first module and the second module are two modules independent of each other.
